(19) **Europäisches Patentamt / European Patent Office / Office européen des brevets**

(11) **EP 2 039 106 B1**

(12) **FASCICULE DE BREVET EUROPEEN**

(45) Date de publication et mention
de la délivrance du brevet:
**20.11.2013 Bulletin 2013/47**

(21) Numéro de dépôt: **07803900.5**

(22) Date de dépôt: **19.06.2007**

(51) Int Cl.:
*H04L 29/02* (2006.01)    *H04L 29/06* (2006.01)

(86) Numéro de dépôt international:
**PCT/FR2007/051475**

(87) Numéro de publication internationale:
**WO 2007/148017 (27.12.2007 Gazette 2007/52)**

(54) **PROCÉDÉ DE COMMUNICATION, STATIONS ÉMÉTTRICE ET RÉCEPTRICE ET PROGRAMMES D'ORDINATEUR ASSOCIÉS**

KOMMUNIKATIONSVERFAHREN, SENDER, EMPFÄNGER UND COMPUTERPROGRAMM

METHOD OF COMMUNICATION, ASSOCIATED SENDING AND RECEIVING STATIONS AND COMPUTER PROGRAMS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **20.06.2006 FR 0605492**

(43) Date de publication de la demande:
**25.03.2009 Bulletin 2009/13**

(73) Titulaire: **Orange**
**75015 Paris (FR)**

(72) Inventeurs:
• **BACHIR, Abdelmalik**
**W2 5HD London (GB)**
• **SAMPER, Ludovic**
**13410 Lambesc (FR)**
• **BARTHEL, Dominique**
**38190 Bernin (FR)**

(56) Documents cités:
• XIAOLEI SHI ET AL: "Wake-up-frame scheme for ultra low power wireless transceivers" GLOBAL TELECOMMUNICATIONS CONFERENCE, 2004. GLOBECOM '04. IEEE DALLAS, TX, USA 29 NOV.- 3 DEC., 2004, PISCATAWAY, NJ, USA,IEEE, 29 novembre 2004 (2004-11-29), pages 3619-3623, XP010758412 ISBN: 0-7803-8794-5
• ABDELMALIK BACHIR ET AL: "Abstract Frames for Reducing Overhearing in Wireless Sensor Networks" NETWORKING 2006. NETWORKING TECHNOLOGIES, SERVICES, AND PROTOCOLS; PERFORMANCE OF COMPUTER AND COMMUNICATION NETWORKS; MOBILE AND WIRELESS COMMUNICATIONS SYSTEMS LECTURE NOTES IN COMPUTER SCIENCE;; LNCS, SPRINGER-VERLAG, BE, vol. 3976, 2006, pages 880-891, XP019030889 ISBN: 3-540-34192-7

**Description**

La présente invention concerne les techniques de communication utilisées dans les réseaux de télécommunications. Elle s'applique particulièrement, mais non exclusivement, dans les réseaux ad hoc.

Les réseaux ad hoc sont des réseaux de communication dépourvus d'infrastructure fixe. Un certain nombre de stations sans fil sont équipées de moyens d'émission et/ou réception radio et de protocoles adéquats pour former les noeuds du réseau ad hoc.

Ces stations composant le réseau ad hoc peuvent être sous la forme d'ordinateurs fixes ou portables, d'ordinateurs de poche, de téléphones mobiles, de véhicules, d'appareils électroménagers, etc. Les moyens d'émission-réception peuvent aussi être associés à des objets simples tels que des capteurs ou des actionneurs. Un réseau ad hoc de capteurs permet ainsi d'effectuer de la collecte d'informations par exemple en vue de surveiller ou de contrôler des installations.

Le succès des réseaux ad hoc dépend beaucoup de la durée de vie des stations constituant les noeuds du réseau. L'économie d'énergie est un facteur crucial pour concevoir des réseaux de capteurs à grande durée de vie, notamment parce que les noeuds sont généralement alimentés par des piles dont le remplacement ou le rechargement est généralement coûteux et difficile, voire impossible.

Les protocoles d'accès à un médium de transmission classique (par exemple IEEE 802.11), nécessitent que les récepteurs radio des stations soient allumés en permanence toujours prêts à recevoir le signal. Ce mode « prêt à recevoir » consomme beaucoup d'énergie. Or s'il n'y a aucune transmission sur le canal, l'énergie est gaspillée par cette écoute passive (« idle listening » en anglais). Ce problème est particulièrement crucial dans des réseaux de capteurs à faible trafic du type ad hoc où le canal est libre la plupart du temps.

Afin de résoudre ce problème, il existe des méthodes qui permettent de réduire le surcoût de l'écoute passive. Par "écoute passive", on entend désigner une écoute active d'un canal radio par un noeud récepteur, consommatrice d'énergie, mais infructueuse, c'est-à-dire sans réception d'un signal destiné à ce noeud récepteur durant l'écoute.

Parmi les méthodes connues figurent celles selon lesquelles un noeud récepteur écoute le canal radio par intermittence. Les signaux émis comprennent alors généralement un préambule suivi d'une trame de données. De telles méthodes sont appelées techniques par échantillonnage de préambule.

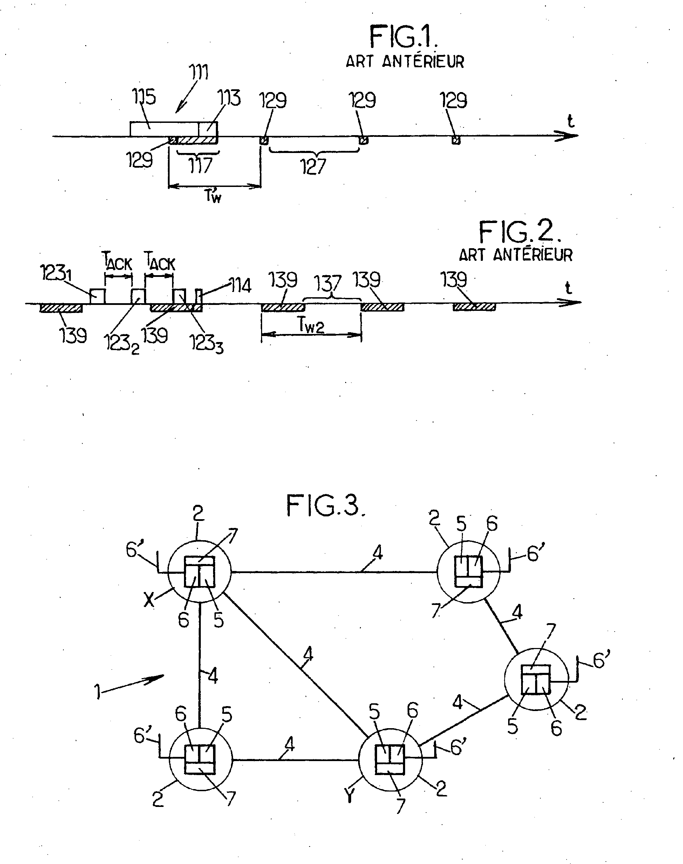

La figure 1 montre de manière schématique, selon l'axe des temps t, un signal 111 qui est émis sur le canal radio par un noeud émetteur E à destination d'un noeud récepteur R selon un tel protocole à échantillonnage de préambule. Le signal 111 comprend un préambule 115, par exemple une trame qui contient des répétitions de motifs de bits connus, et une trame de données 113.

D'emblée on notera que le "mode d'écoute radio active" d'un noeud correspond au fonctionnement du noeud lorsque ses moyens de réception radio sont activés, consomment de l'énergie et sont donc aptes à recevoir un éventuel signal transmis à destination du noeud, alors que le "mode d'écoute radio inactive" correspond au fonctionnement du noeud lorsque ses moyens de réception radio sont en veille et ne consomment pas d'énergie.

Le noeud récepteur R, comme chaque noeud récepteur du réseau, est en mode d'écoute radio active (radio allumée) pendant de brefs et périodiques moments de réveil, de durée déterminée, représentés par les carrés 129 le long de l'axe des temps t. Le temps séparant le début de deux moments de réveil 129 consécutifs est égal à T'w. Ces moments de réveil 129 sont espacés par de longues périodes d'inter-éveil 127, pendant lesquelles le noeud récepteur est en mode d'écoute radio inactive (radio éteinte) : aucune énergie n'est alors consommée pour une tâche d'écoute radio. Les moments de réveil des noeuds récepteurs ne sont pas nécessairement concomitants.

Lors des moments de réveils 129, le noeud récepteur R passe en mode actif d'écoute radio pendant le moment pour écouter le canal et déterminer s'il y a un signal transmis sur le canal.

Si le noeud récepteur R détermine que le canal est libre, il retourne à un état d'écoute radio inactive (radio éteinte) à l'issue du moment 129. En revanche, s'il détecte, lors du moment d'écoute 129, la présence d'au moins un motif de bits déterminé, il en déduit la présence d'un préambule sur le canal et il reste en mode d'écoute radio active jusqu'à recevoir la trame de données 113 qui suit le préambule 115 (période 117), le cas échéant au-delà du moment d'écoute 129.

Après réception des données 113, le noeud récepteur R retourne à un état d'écoute radio inactive.

Ainsi, dans ce genre de protocoles, un noeud passe la plupart de son temps en mode d'écoute radio inactive afin de réduire l'écoute passive et donc d'économiser l'énergie.

Par ailleurs, quand un noeud veut envoyer une trame de données, il écoute d'abord le canal. S'il détermine que le canal est occupé, il continue d'écouter jusqu'à ce que le canal se libère. En revanche, s'il détermine que le canal est libre, il envoie un préambule, puis la trame de données. La durée du préambule doit être au moins égale à T'w, pour assurer que tous les noeuds récepteurs potentiels passent en mode actif d'écoute au cours de l'émission du préambule et sont ainsi en mesure de recevoir les données qui suivent le préambule.

Ainsi quand un noeud détecte un préambule, pour recevoir la trame de données, il doit écouter le canal en continu jusqu'à la réception de la trame de données.

Par ailleurs, on connaît la méthode WOR ou Wake-on-Radio (Chipcon AS, CC1100/CC2500 Wake on Radio Application Note (Rev 1.0) July 2005), selon laquelle le récepteur écoute également le canal radio par intermittence, de façon similaire au récepteur R de la méthode décrite plus haut.

Selon la méthode WOR, lorsqu'un noeud émetteur E souhaite transmettre une trame de données 123, il émet préalablement à la trame de données une succession de copies de cette trame de données.

La méthode WOR, dans un premier mode dit sans acquittement, consiste en l'envoi par un noeud émetteur E' de n copies successives de la trame de données, qui s'étale sur une période supérieure à la période T"w séparant les débuts de deux moments de réveil successifs.

Dans un second mode dit avec acquittement, le noeud émetteur E' arrête d'envoyer les trames de données dès qu'il a reçu un acquittement envoyé par le noeud récepteur R' auquel la trame de données était destinée.

Ainsi dans ce second mode, le noeud émetteur E' envoie sur le canal radio au maximum n copies $123_1$, $123_2$, ..., $123_n$ préalables de la trame de données, n étant un nombre prédéfini (par exemple, dans le cas considéré, n est égal à cinq). Après l'envoi d'une trame de données $123_i$, le noeud émetteur E' écoute le canal radio pendant un délai $T_{ACK}$ afin de détecter un éventuel signal d'acquittement envoyé par le destinataire de la trame de donnée. S'il ne détecte aucun signal d'acquittement au terme de ce délai $T_{ACK}$, il envoie une nouvelle copie de la trame de donnée et ainsi de suite jusqu'à avoir envoyé cinq copies de la trame de donnée. En revanche, si le noeud émetteur E' reçoit un signal d'acquittement, il stoppe l'émission des copies de la trame de données.

Dans le cas particulier décrit à la figure 2, le noeud émetteur E' a envoyé trois premières copies de la trame de données $123_1$, $123_2$ et $123_3$. Pendant l'écoute du canal suite à l'émission de la troisième copie de la trame de données, le noeud émetteur E' détecte la transmission sur le canal d'un signal d'acquittement 114 envoyé par le noeud destinataire R' de la trame de données. Il n'envoie donc pas de quatrième et cinquième copies de la trame de données.

Côté noeud récepteur, le noeud récepteur R', est en mode d'écoute radio active (radio allumée) pendant des moments d'éveil représentées par les carrés 139 le long de l'axe des temps t, qui sont espacés par de longues périodes d'inter-éveil 137. La durée séparant les débuts de deux moments de réveil successifs est égale $Tw_2$ secondes, pendant lesquelles le noeud récepteur R' est en mode d'écoute radio inactive.

Toutes les $Tw_2$ secondes, le noeud récepteur R' se réveille pour vérifier s'il y a un signal transmis sur le canal. Pour cela, le noeud passe en mode d'écoute radio active pendant la période 139 pour écouter le canal. Si le noeud détermine que le canal est libre, il retourne à un état d'écoute radio inactive (radio éteinte). En revanche, s'il détecte, lors de la période d'écoute 139, que le canal est occupé, il effectue les opérations nécessaires (détection de bits d'entête indiquant une trame de données, détection des bits de synchronisation, vérification de non corruption de trame) pour recevoir en son entier et correctement une trame de données transmise sur le canal radio. Après réception correcte de la trame de données, le noeud récepteur R' envoie un signal d'acquittement, puis retourne à un état d'écoute radio inactive.

En référence à la figure 2, le noeud récepteur R' n'a pas pu recevoir correctement la première copie $123_1$ de la trame de donnée envoyée par le noeud émetteur E', puisqu'il n'était pas en mode d'écoute radio active lors du début de la transmission de cette copie. Le noeud récepteur R' est en mode d'écoute inactive lors de la transmission de la seconde copie de la trame de données $123_2$. En revanche, il détecte lors d'un moment de réveil 139 le début de la transmission de la troisième copie $123_3$ de la trame de données et reste en mode d'écoute active jusqu'à la fin de la réception de cette troisième copie. Ensuite, il passe en mode émission pour émettre sur le canal un signal d'acquittement 114 destiné au noeud émetteur E'.

L'avantage de ce second mode de la méthode WOR est que l'envoi d'un signal d'acquittement garantit la bonne réception de la trame de données envoyées. En cas de non acquittement, le noeud émetteur E' peut décider d'envoyer à nouveau la trame de données.

La durée d'un moment de réveil 139 est fixée au moins égale au temps qui sépare le début de transmission d'une copie d'une trame de données i et le début de transmission de la copie suivante i+1, soit égale à la somme du temps de transmission d'une trame et du temps $T_{ACK}$ au cours duquel l'émetteur attend le signal d'acquittement.

Plus le trafic est faible, plus l'écoute passive du noeud récepteur sera importante pendant ces moments de réveil, du fait de la prise en compte du temps $T_{ACK}$ dans la durée de la période d'écoute 139.

Le document "Wake-Up-Frame Scheme for Ultra Low Power Wireless Transceivers" par Shi et al, publié par IEEE Communications Society Globecom en 2004, décrit une technique de communication par échantillonnage de préambule dans un réseau sans fil, selon laquelle un signal comportant un préambule suivi d'une unique trame de données est émis par un émetteur.

Le préambule comporte de petites trames. Chacune de ces trames indique un nombre de trames de préambule la séparant de la trame de données. Ainsi, lorsque le récepteur reçoit une courte trame de préambule, il peut déterminer le nombre de petites trames du préambule restant à émettre et peut se mettre en veille pour ne se réveiller qu'au moment de la réception de la trame de données.

Il existe donc un besoin, notamment dans le cas de l'émission d'une succession de copies d'une trame de données avant l'émission de cette trame de données, pour permettre une diminution de l'écoute passive du noeud récepteur, fortement consommatrice en énergie, tout en permettant l'envoi par celui-ci d'un signal d'acquittement de la bonne transmission de la trame de données.

A cet effet, suivant un premier aspect, l'invention propose un procédé de communication, sur un canal radio, entre au moins deux noeuds adaptés pour émettre sur le canal de façon alternée, comprenant les étapes suivantes, en vue de transmettre une trame de données :

- élaboration, par l'un des deux noeuds, dit émetteur, d'un signal comprenant un préambule comportant une suite de trames suivi de la trame de données, au moins une première trame du préambule comportant une copie de la trame de données et indiquant un nombre de trames du préambule séparant ladite première trame de la trame de données ;

- émission, par le noeud émetteur, du signal ainsi élaboré sur le canal radio.

L'indication du nombre permet à un noeud récepteur de se mettre en mode d'écoute inactive dès réception de la première trame et de prévoir son réveil au terme de l'émission du signal, pour envoyer alors son signal d'acquittement. L'écoute passive peut ainsi être diminuée.

L'émission du signal comportant la trame de données peut donc avoir lieu en bloc, c'est-à-dire qu'il n'y a pas de période, entre l'émission respective de deux copies successives de la trame de données, pendant laquelle l'émetteur scrute le canal en attente d'un signal d'acquittement ($T_{ACK}$ est donc ici égal à zéro), le passage du noeud émetteur en mode actif d'écoute pour détecter un signal d'acquittement n'ayant lieu qu'après l'envoi du signal complet. La durée du réveil périodique d'écoute est par conséquent diminuée par rapport au second mode de la méthode WOR, ce qui a pour conséquence la diminution du temps d'écoute passive par les noeuds.

Dans un mode de réalisation, le procédé comprend en outre les étapes suivantes, suite à la réception, par l'autre noeud, dit récepteur, de ladite première trame :

- détermination, en fonction du nombre indiqué par la trame reçue, du délai jusqu'à l'issue de l'émission de la trame de données du signal ;

- passage dans un mode d'écoute radio inactive du noeud récepteur pendant ledit délai déterminé.

Cette disposition a pour effet de permettre la réduction de l'écoute passive et donc de la consommation d'énergie.

Dans un mode de réalisation, suite à la réception, par l'autre noeud, dit récepteur, d'une trame de la suite de trames, le procédé comprend les étapes suivantes :

- détermination, en fonction du nombre indiqué par ladite première trame reçue, du délai jusqu'à l'issue de l'émission de la trame de données du signal ;
- émission d'un accusé de réception relatif à ladite première trame reçue à l'issue dudit délai déterminé.

Le noeud récepteur peut donc déterminer à partir de quand le canal radio ne sera plus occupé par la transmission de la trame de données reçue et/ou d'au moins une de ses copies. Il n'a donc pas à dépenser de l'énergie en scrutant le canal pour détecter si le canal est libre, en vue d'émettre le signal d'acquittement.

Dans un mode de réalisation, le procédé comprend la sélection, par un noeud comportant des moyens d'émission radio, d'un mode entre au moins un premier et un second modes d'élaboration d'un signal comprenant un préambule et la trame de données, le préambule comportant une suite de trames qui comprend au moins une première trame indiquant un nombre de trames de la suite séparant ladite première trame de la trame de données et indiquant en outre le mode sélectionné.

Le premier mode est conforme à celui indiqué ci-dessus. Les trames de la suite de trames dans le préambule du signal élaboré conformément au second mode sont de taille réduite par rapport à la trame de données.

Le procédé comprend ensuite l'élaboration du signal conformément au mode sélectionné, et l'émission, par le noeud, du signal ainsi élaboré sur le canal radio.

Un tel procédé permet ainsi d'adapter l'émission sur le canal radio, en fonction de divers facteur. Les trames émises dans le préambule comportent les informations nécessaires quant au mode sélectionné pour permettre au noeud récepteur de recevoir la trame de données, ou une copie dans le cas du premier mode d'élaboration.

Dans un mode de réalisation, le procédé comprend la détermination, par le noeud émetteur, d'un taux d'erreur de transmission sur le canal, le mode d'élaboration du signal étant sélectionné par ledit noeud en fonction d'au moins ce taux d'erreur déterminé.

Le signal élaboré est ainsi particulièrement adapté aux caractéristiques du canal radio utilisé.

Avantageusement, suite à la réception, par l'autre noeud, dit récepteur, d'une trame de la suite de trames, le procédé comprend les étapes suivantes :

- lecture du mode indiqué par la trame reçue ;
- détermination, en fonction du nombre de trames indiqué par ladite trame reçue, du délai jusqu'à l'émission de la trame de données du signal ;
- passage dans un mode d'écoute radio inactive du noeud récepteur pendant une période calculée en fonction du délai déterminé ;
- si le mode indiqué par ladite trame reçue est le second mode, passage dans un mode d'écoute radio active du noeud récepteur à l'issue de la période calculée pour recevoir ladite trame de données.

Cette disposition permet de réduire l'écoute passive. Pour recevoir la trame de données, le noeud récepteur n'a pas besoin d'écouter le canal radio jusqu'à ce qu'il détecte la trame de données qui suit le préambule.

Dans un mode de réalisation, le procédé comprend en outre les étapes suivantes :

- détermination, par l'autre noeud, dit récepteur, d'un taux d'erreur de transmission sur le canal ;
- sélection, en fonction d'au moins le taux d'erreur déterminé, par le noeud récepteur, d'un mode entre au moins un premier et un second modes de réception d'un signal comprenant un préambule comprenant une suite de trames suivi de la trame de données.

Selon ce mode de réalisation, dans le premier mode de réception, si le noeud récepteur détecte une transmission d'une trame de préambule sur le canal, ledit noeud reste en mode d'écoute radio active jusqu'à ce qu'il reçoive une trame correcte du préambule ou jusqu'à ce que le noeud récepteur détermine que le canal est libéré. On parle de réception persistante. Et dans le second mode de réception, si le noeud récepteur détecte une transmission d'une trame d'un préambule sur le canal, le noeud passe en mode d'écoute radio inactive après la réception d'une trame incorrecte du préambule alors qu'au moins une trame du préambule est émise sur le canal après la trame incorrecte. On parle de réception non persistante. Ces comportements en réception persistante ou non persistante ont des effets sur les temps des noeuds passés en émission et/ou en réception (et donc sur la consommation d'énergie) et sur la fiabilité des échanges, qui dépendent de la probabilité d'erreur sur le canal.

La sélection du mode de réception par un noeud permet ainsi d'adapter la réception de chaque noeud dans le réseau.

Avantageusement, une sélection par le noeud émetteur entre le premier et le second modes d'élaboration du signal est réalisée en vue des échanges avec un noeud voisin en fonction d'un taux d'erreur relatif au canal déterminé en fonction des échanges entre ledit noeud émetteur et ledit noeud voisin à l'exclusion des échanges avec les autres noeuds. Cette disposition permet une réduction encore plus importante de la consommation d'énergie.

Avantageusement, une sélection par le noeud récepteur entre le premier et le second modes de réception du signal est réalisée en vue des échanges avec un noeud voisin en fonction d'un taux d'erreur relatif au canal déterminé en fonction des échanges entre ledit noeud récepteur et ledit noeud voisin à l'exclusion des échanges avec les autres noeuds. Cette disposition permet une réduction encore plus importante de la consommation d'énergie. Cette disposition permet une réduction encore plus importante de la consommation d'énergie.

Dans un mode de réalisation, la sélection entre le premier et le second modes d'élaboration du signal est réalisée en fonction de un ou plusieurs éléments parmi une valeur représentative d'une dépense énergétique estimée en fonction d'une probabilité d'erreur, une valeur de fiabilité de transmission globale sur le réseau estimée en fonction d'une probabilité d'erreur, et une valeur seuil de fiabilité de transmission fixée.

Dans un mode de réalisation, la sélection entre le premier et le second modes de réception du signal est réalisée en fonction de un ou plusieurs éléments parmi une valeur représentative d'une dépense énergétique estimée en fonction d'une probabilité d'erreur, une valeur de fiabilité de transmission globale sur le réseau estimée en fonction d'une probabilité d'erreur, et une valeur seuil de fiabilité de transmission fixée.

Des compromis maîtrisés entre consommation d'énergie et par exemple une valeur de fiabilité de transmission garantie par l'opérateur technique du réseau peuvent ainsi être réalisés.

Suivant un second aspect, l'invention propose une station émettrice pour former un noeud apte à émettre sur un canal radio de communication en semi-duplex. Cette station émettrice comporte :

- des moyens d'élaboration, adaptés pour élaborer, en vue de transmettre une trame de données, un signal comprenant un préambule comportant une suite de trames suivi de la trame de données, au moins une première trame de la suite de trames comportant une copie de la trame de données et indiquant un nombre de trames de la suite séparant ladite première trame de la trame de données ;
- des moyens d'émission radio adaptés pour émettre le signal ainsi élaboré sur le canal radio.

Suivant un troisième aspect, l'invention propose une station réceptrice pour former un noeud apte à écouter par intermittence un canal radio. Cette station réceptrice comporte :

- des moyens de réception radio ;
- des moyens de détermination pour, lors de la réception, par les moyens de réception radio, d'au moins une première trame comportant une copie d'une trame de données, cette première trame étant une trame d'une suite de trames d'un préambule d'un signal, émis sur le canal, ledit signal comprenant ledit préambule suivi de ladite trame de données, déterminer, en fonction d'un nombre lu dans la première trame reçue et indiquant un nombre de trames de la suite de trames séparant cette première trame de la trame de données, un délai jusqu'à l'issue de l'émission de la trame de données du signal ;
- des moyens de contrôle, adaptés pour provoquer le passage dans un mode d'écoute radio inactive des moyens de réception radio du noeud pendant le délai déterminé.

Suivant un quatrième aspect, l'invention propose un programme d'ordinateur à installer dans une station émettrice pour former un noeud apte à émettre sur un canal radio. Ce programme comprend des instructions pour mettre en oeuvre les étapes d'un procédé suivant le premier aspect de l'invention et qui incombent à une station émettrice, lors d'une exécution du programme par des moyens de traitement de cette station émettrice, en vue de transmettre une trame de données.

Suivant un cinquième aspect, l'invention propose un programme d'ordinateur à installer dans une station réceptrice pour former un noeud apte à écouter le canal radio par intermittence. Ce programme comprend des instructions pour mettre en oeuvre les étapes d'un procédé suivant le premier aspect de l'invention et qui incombent à une station réceptrice, lors d'une exécution du programme par des moyens de traitement de cette station réceptrice.

D'autres caractéristiques et avantages de l'invention apparaîtront encore à la lecture de la description qui va suivre. Celle-ci est purement illustrative et doit être lue en regard des dessins annexés sur lesquels :

- la figure 3 est un schéma d'un réseau sans fil ad hoc auquel l'invention est applicable ;
- la figure 4a représente un signal S émis selon le mode DFP dans un mode de réalisation de l'invention ;
- la figure 4b représente l'activité radio d'un noeud pendant la transmission du signal S représenté en figure 4a ;
- la figure 5a représente un signal S' émis selon le mode MFP dans un mode de réalisation de l'invention ;
- la figure 5b représente l'activité radio d'un noeud pendant la transmission du signal S' représenté en figure 5a ;
- la figure 6 représente la structure d'une trame du préambule d'un signal émis dans un mode de réalisation de l'invention ;
- la figure 7 est un organigramme des étapes d'un procédé selon l'invention mis en oeuvre par un noeud ;
- la figure 8 représente les réveils périodiques d'un noeud ;
- la figure 9 représente un graphe représentant une durée moyenne d'activité radio, comprenant l'activité en émission et l'activité en réception, en fonction de la probabilité d'erreur sur le canal radio ;
- la figure 10 représente la fiabilité de transmission en fonction de la probabilité d'erreur sur le canal radio.

Sur la figure 3 est représenté un réseau de télécommunications 1, dans le cas considéré, un réseau ad hoc, comportant une pluralité de stations émettrices-réceptrices 2 destinées à constituer chacune un noeud du réseau ad hoc 1.

Un noeud 2 comporte un module de traitement 5, un module d'émission/réception 6 qui assure les traitements de couche physique et de couche de liaison (couches 1 et 2 du modèle OSI) en vue d'échanger des signaux avec un noeud voisin par l'intermédiaire d'un canal radio partagé 4. Le module d'émission/réception 6 est relié à une antenne 6'. La mise sous/hors tension du module d'émission/réception 6 est commandé par des moyens de contrôle 7.

Lorsqu'un noeud 2, par exemple le noeud X, doit transmettre une trame de données $T_D$ à un noeud voisin Y, le module de traitement 5 du noeud X élabore un signal correspondant. Ce signal comporte un préambule suivi de la trame de données $T_D$. Puis le noeud X transmet par l'intermédiaire de son module d'interface sans fil 6 et de son antenne 6' le signal ainsi élaboré sur le canal radio 4.

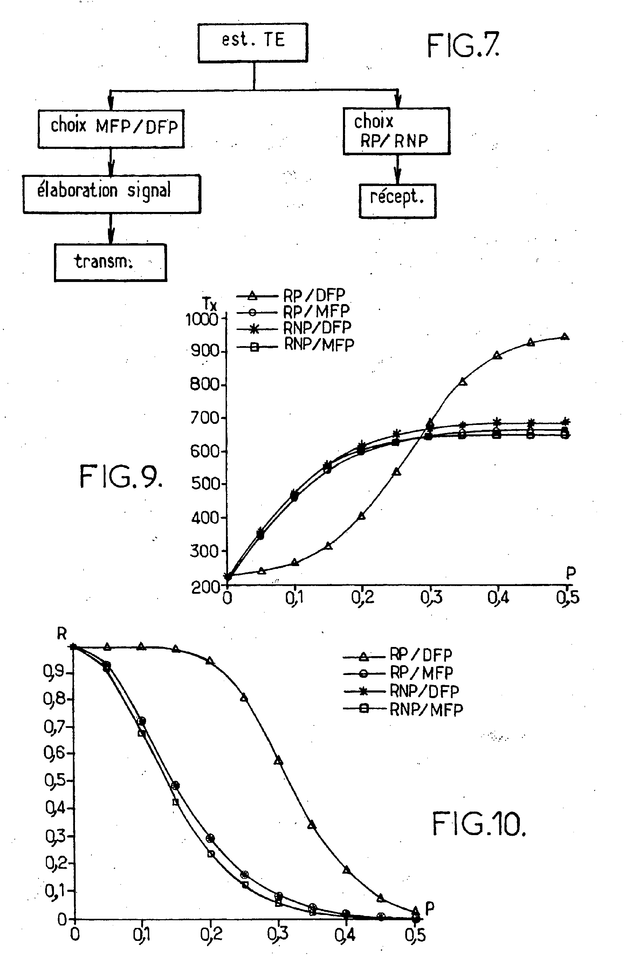

Plus précisément, en référence à la figure 7, lorsqu'une trame de données doit être transmise par un noeud 2, le module de traitement 5 du noeud X estime d'abord un taux d'erreur de transmission $TE_X$ sur le canal radio 4, à partir des signaux échangés par le noeud X avec les noeuds voisins.

Puis, en fonction de ce taux d'erreur de transmission $TE_X$ estimé, le module de traitement 5 du noeud X sélectionne un mode d'élaboration d'un signal parmi deux modes d'élaboration MFP (Micro Frame Preamble) et DFP (Data Frame Preamble). Des règles de sélection sont décrites plus loin.

Le module de traitement 5 élabore ensuite un signal conformément au mode d'élaboration sélectionné.

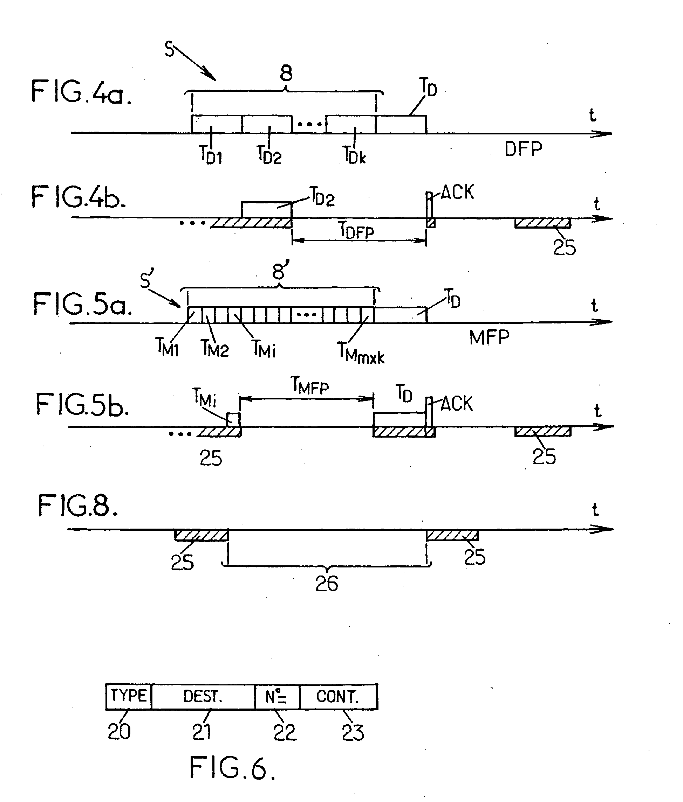

Si le mode d'élaboration sélectionné est le mode DFP, alors le module de traitement 5 constitue un signal S. Ce signal S est représenté en figure 4a, tel qu'émis sur le canal radio 4 en fonction du temps t. Il comporte un préambule 8 suivi de la trame de données $T_D$. Le préambule 8 comporte une suite de k trames (k entier supérieur ou égal à 1), $T_{D1}$, $T_{D2}$ ... $T_{Dk}$. Chaque trame $T_{Di, i=1 \, à \, k}$ de la suite 8 comporte une copie de la trame de données $T_D$ et une indication du nombre de trames de la suite séparant la trame $T_{Di}$ de la trame de données $T_D$ qui suit le préambule 8.

Par exemple dans le mode de réalisation considéré, chaque trame $T_{Di, i=1 \text{ à } k}$ comporte le nombre (k - i) dans un champ dédié de la trame.

Puis le signal S ainsi élaboré est transmis à l'antenne 6 du noeud X pour émission sur le canal 4. Les trames $T_{Di, i=1 \text{ à } k}$ et la trame de données $T_D$ sont émises en bloc, l'une à la suite de l'autre et de façon continue. En particulier, le noeud X ne passe pas en mode actif d'écoute radio entre l'émission d'une trame $T_{Di, i=1 \text{ à } k}$ du préambule et l'émission de la trame $T_{Di+1}$ qui suit.

Si le mode d'élaboration sélectionné est le mode MFP, alors le module d'interface sans fil 5 constitue un signal S'. Ce signal S' est représenté en figure 5a, tel qu'émis sur le canal radio 4 en fonction du temps t. S' comporte un préambule 8' suivi de la trame de données $T_D$. Le préambule 8' comporte une suite de m*k micro-trames (m entier strictement supérieur à 1), $T_{M1}$, $T_{M2} \ldots T_{Mm*k}$. Les micro-trames sont de longueur réduite par rapport à la trame de données $T_D$. Chaque micro-trame $T_{Mj, j=1 \text{ à } m*k}$ de la suite comporte une indication du nombre de micro-trames de la suite séparant la trame de la trame de données $T_D$ qui suit le préambule 8'. Par exemple dans le mode de réalisation considéré, chaque trame $T_{Mj, j=1 \text{ à } m*k}$ comporte le nombre (m*k - j) dans un champ dédié de la trame.

Puis le signal S' ainsi élaboré est transmis à l'antenne 6 du noeud X pour émission sur le canal 4. Dans le mode de réalisation considéré, les trames $T_{Mj, j=1 \text{ à } m*k}$ comportent en outre une signature de la trame de données $T_D$, par exemple obtenue en appliquant une fonction de hachage à la trame de données $T_D$.

Dans le mode de réalisation considéré, chaque trame, $T_{Di, i=1 \text{ à } k}$ pour le mode DFP et $T_{Mj, j=1 \text{ à } m*k}$ pour le mode MFP, des préambules 8,8' du signal S,S', élaborée par le module d'interface sans fil 5 comporte les champs indiqués en figure 6.

Ainsi le module de traitement 5 indique dans une trame, $T_{Di, i=1}$ à k ou $T_{Mj j=1 \text{ à } m*k}$ :

- dans un champ 20 « TYPE », le mode d'élaboration sélectionné : MFP ou DFP,
- dans un champ 21 « DESTINATION », l'adresse MAC du noeud Y destinataire du signal S, S',
- dans un champ 22 « N° », l'indication du nombre de trames du préambule séparant la trame considérée de la trame de données $T_D$ qui suit le préambule, soit, dans le cas présent (k - i) pour une trame $T_{Di, i=1 \text{ à } k}$ du mode DFP et (m*k - j) pour une trame $T_{Mj, j=1 \text{ à } m*k}$ du mode MFP,
- dans un champ 23 « CONTENU », la copie de la trame de données $T_D$ pour une trame $T_{Di, i=1 \text{ à } k}$ du mode DFP, et la signature de la trame de données $T_D$ pour une trame $T_{Mj, j=1 \text{ à } m*k}$ du mode MFP.

Chaque noeud 2 est adapté pour être en mode actif d'écoute radio (radio allumée) à des moments de réveils et être en mode inactif d'écoute radio (radio éteinte) entre les moments de réveil, les moments de mode actif et inactif d'écoute radio des différents noeuds récepteurs n'étant pas nécessairement concomitants. Les moyens de contrôle 7 sont adaptés pour commander l'endormissement et le réveil des noeuds.

En référence à la figure 8, un noeud 2 est en mode actif d'écoute radio (radio allumée) pendant des moments d'éveil représentés par les rectangles 25 le long de l'axe des temps t, qui sont espacés par de longues périodes d'inter-éveil 26, pendant lesquelles le noeud récepteur 2 est en mode inactif d'écoute radio.

Les préambules 8, 8' sont d'une durée supérieure ou égale à la durée Tw séparant les débuts des moments d'éveil périodiques consécutifs des noeuds 2 du réseau 1, au cours desquels les noeuds sont en mode actif d'écoute radio (radio allumée). Ceci permet de garantir que le préambule sera diffusé pendant un moment de réveil de chaque noeud.

Dans le cas décrit, la durée des préambules 8, 8' est donc égale à la durée Tw. Soit Tw = m*k*f, où f est égale à la durée d'émission d'une micro-trame $T_{Mj, j=1 \text{ à } m*k}$ du mode MFP, m*f étant égale à la durée d'émission d'une trame $T_{Di, i=1 \text{ à } k}$ du mode D FP.

Dans le cas considéré, la durée des moments d'éveil 25 est égale à m*f secondes, soit la durée d'une trame $T_{Di}$ d'un préambule élaboré dans le mode DFP.

Dans un mode de réalisation de l'invention, le module d'interface sans fil du noeud Y est adapté pour estimer, régulièrement ou ponctuellement, un taux d'erreur de transmission $TE_Y$ sur le canal radio 4, par exemple à partir des signaux échangés par le noeud Y avec les noeuds voisins.

Puis, en fonction de cette probabilité d'erreur $TE_Y$ mesuré, le module d'interface sans fil 5 du noeud Y sélectionne un mode de réception parmi deux modes de réception, appelés RP (réception persistante) et RNP (réception non persistante), comme illustré sur la figure 7.

Toutes les Tw secondes, le noeud 2, par exemple le noeud Y, par l'intermédiaire de son module de traitement 5, vérifie, pendant le moment d'écoute 25, s'il y a un signal transmis sur le canal 4. Si le noeud Y détermine que le canal 4 est libre, il retourne à un état inactif d'écoute radio (radio éteinte) au terme du moment d'écoute 25.

En revanche, s'il détecte, lors du moment d'écoute 25, que le canal est occupé, il effectue des opérations, notamment de détection des bits de synchronisation, pour permettre une réception correcte d'une trame de préambule.

Dans le cas où le noeud Y a sélectionné le mode de réception RNP, tant que le moment d'éveil périodique 25 n'est pas achevé et que le canal est occupé, le noeud Y écoute le canal radio afin de recevoir une trame de préambule correcte, c'est-à-dire une trame dont les champs ont été reçus sans erreur. Une erreur de réception est détectée par le noeud Y par exemple à l'aide d'un contrôle par redondance cyclique ou CRC. Puis si au terme du moment périodique d'éveil 25, le noeud Y n'a pas reçu de trame de préambule correcte ou n'est pas en train de recevoir une trame a priori correcte, il retourne en mode d'écoute inactive, même si une ou plusieurs trames du préambule sont ensuite émises. S'il est en train de recevoir une trame de préambule, il en termine la réception, puis retourne en mode d'écoute radio inactive.

Dans le cas où le noeud Y a sélectionné un mode de réception RP, le noeud Y tente de recevoir une trame de préambule correcte tant que le canal radio n'est pas libéré. Ainsi le noeud Y reste en mode d'écoute radio active même au-delà du moment périodique de réveil 25, si la transmission du préambule qui a débuté lors du moment périodique de réveil 25, se poursuit après le moment périodique de réveil 25.

Une fois qu'une trame de préambule a été correctement reçue, dans un mode de réception RP ou RNP, le noeud Y passe en mode d'écoute radio inactive.

Par l'intermédiaire de son module de traitement 5, le noeud Y extrait de la trame de préambule reçue, le contenu du champ 20 « TYPE », du champ 21 « DESTINATION », du champ 22 « N° et du champ 23 « CONTENU ».

Si le champ 20 « TYPE » indique le mode d'élaboration MFP, alors le module de traitement 5 du noeud Y vérifie que le contenu extrait du champ 21 « DESTINATION » de la trame reçue, par exemple la micro-trame $T_{Mj}$ du préambule 8' du signal S' représenté en figure 5a, correspond bien à l'adresse MAC du noeud Y.

Si c'est le cas, alors le module de traitement 5 du noeud Y vérifie à l'aide de la signature de la trame de données $T_D$ contenue dans le champ 23 que les données de la trame de données n'ont pas déjà été reçues précédemment (les signatures des trames de données déjà reçues sont par exemple stockées dans une mémoire du noeud Y).

Si elles n'ont pas déjà été reçues, le module de traitement 5 du noeud Y détermine en fonction du numéro indiqué dans le champ 22 et de la durée, connue, de la transmission d'une micro-trame, la durée d'occupation $T_{MFP}$ du canal jusqu'à la fin de la transmission du préambule 8', puis il fournit cette durée aux moyens de contrôle 7 du noeud 2.

En référence à la figure 5b, qui représente les périodes d'activité radio avec radio allumée en zones grisées du noeud Y pendant la transmission du signal S' telle que représentée en figure 5a. Les moyens de contrôle 7 du noeud Y commandent alors la poursuite du mode d'écoute inactive, depuis la fin de la réception de la micro-trame $T_{Mj}$ du préambule, jusqu'à la fin de cette durée d'occupation $T_{MFP}$ du canal, et commandent le passage en mode d'écoute active du noeud Y à l'issue de cette durée $T_{MFP}$, pour recevoir la trame de données $T_D$.

A l'issue de la réception de la trame de données $T_D$, un signal d'acquittement ACK est émis par le noeud Y, puis les moyens de contrôle 7 du noeud Y commandent le retour en mode d'écoute inactive jusqu'au prochain moment périodique de réveil 25.

Le noeud Y est donc en mode d'écoute active lors de la transmission de la trame de données $T_D$ qui suit le préambule 8' dans le signal S représenté en figure 5, afin de recevoir la trame de données $T_D$.

Ainsi le mode d'écoute inactive étant provoqué lors de la transmission de la partie de préambule qui suit une micro-trame $T_{Mj}$ du préambule 8', l'écoute passive est réduite, la réception de la trame de données $T_D$ qui suit le préambule 8' dans le signal S étant néanmoins permise par la commande du réveil du noeud Y avant sa transmission.

Dans le cas où le contenu extrait du champ 21 « DESTINATION » ne correspond pas à son adresse MAC, ou dans le cas où le noeud Y a déterminé à l'aide de la signature que les données de la trame de données $T_D$ ont déjà été reçues, le noeud Y reste en mode inactif d'écoute radio jusqu'au prochain moment de réveil périodique 25.

Si le champ 20 « TYPE » indique le mode d'élaboration DFP, alors le module de traitement 5 du noeud Y extrait du champ « CONT » 23 de la trame de préambule reçue, par exemple la trame $T_{D2}$ du préambule 8 du signal S représenté en figure 4a, la copie des données de la trame de données $T_D$.

Le module de traitement 5 du noeud Y détermine en fonction du numéro indiqué dans le champ 22 et de la durée, connue, de la transmission d'une trame d'un préambule élaboré en mode DFP, la durée d'occupation $T_{DFP}$ du canal jusqu'à la fin de la transmission du signal S, puis il fournit cette durée aux moyens de contrôle 7 du noeud Y.

En référence à la figure 4b, qui représente les périodes d'activité radio avec radio allumée en zones grisées du noeud Y pendant la transmission du signal S telle que représentée en figure 4a, les moyens de contrôle 7 du noeud Y commandent ainsi la poursuite du mode d'écoute inactive, depuis la fin de la réception de la trame $T_{D2}$ du préambule, jusqu'à la fin de cette durée d'occupation $T_{DFP}$ du canal, et commandent le réveil du noeud Y à l'issue de cette durée, afin d'émettre un message d'acquittement ACK, destiné au noeud X et relatif aux données reçues, sur le canal radio 4 libéré. Une fois le signal d'acquittement émis, les moyens de contrôle 7 du noeud Y commandent son retour en mode d'écoute inactive jusqu'au prochain moment périodique de réveil 25.

Le noeud Y est donc en mode d'écoute inactive lors de la transmission de la partie du préambule 8 qui suit la trame $T_{D2}$ et lors de la transmission de la trame de données $T_D$. Aucune énergie n'est donc dépensée par le noeud Y pour déterminer si la transmission du signal S est terminée, libérant ainsi le canal et permettant la transmission par le noeud Y d'un signal d'acquittement. Le réveil du noeud Y est programmé à l'issue du délai $T_{DFP}$.

Le signal d'acquittement ACK est émis à la fin de la transmission du signal S. Le noeud X n'a donc pas à écouter le canal radio entre l'émission de deux trames $T_{D2}$ du préambule 8. Cette transmission du signal d'acquittement ACK à la suite du signal S n'entraîne pas une augmentation de l'écoute passive puisqu'un noeud qui a déjà reçu une trame du préambule 8 du signal S est basculé en mode d'écoute inactive à la suite de cette réception jusqu'au moment propice à l'envoi du signal d'acquittement.

En outre, le temps d'un moment périodique de réveil est réduit à la durée d'émission d'une trame du préambule 8, diminuant encore l'écoute passive des noeuds (le temps $T_{ACK}$ de la méthode WOR classique étant réduit à zéro grâce à l'invention).

Différentes techniques connues dans l'art antérieur sont utilisables pour estimer les taux d'erreur de transmission sur le canal radio 4, utilisés pour sélectionner un mode d'élaboration de signal parmi les modes DFP et MFP et/ou un mode de réception parmi les modes RP et RNP.

Dans un mode de réalisation, le taux d'erreur de transmission est estimé par un noeud sur la base des micro-trames reçues sur le canal 4 par ce noeud. Il est pris égal au ratio du nombre de micro-trames détectées incorrectes, à l'aide du CRC par exemple, par le nombre de micro-trames totales reçues par le noeud 2.

Dans un mode de réalisation, des taux d'erreur de transmission relatifs aux échanges avec chacun des noeuds voisins sont calculés par un noeud, en vue de sélectionner un mode d'élaboration d'un signal destiné à ce noeud voisin. Pour le calcul d'un tel taux d'erreur, relatif à un noeud voisin, ne sont donc considérées que les micro-trames reçues par le noeud et émises par le noeud voisin.

Chacun des modes d'élaboration de préambule DFP, MFP comporte des avantages respectifs. Dans le mode MFP, à partir du numéro de suite indiqué dans une micro-trame du préambule, le noeud récepteur en déduit quand la trame de données va être transmise. En fonction de l'adresse de destination, il déduit s'il convient de la recevoir ou non. En fonction de la signature, il peut déterminer s'il l'a déjà reçu ou non. Par conséquent, il peut décider de se mettre en mode inactif d'écoute pendant la transmission de la trame de données le cas échéant, réduisant ainsi la consommation d'énergie en décidant de ne pas recevoir la trame de données. La durée d'écoute pour réception d'une micro-trame est courte, mais il faut prévoir un retour en mode actif pour recevoir la trame de données, qui n'est émise qu'une fois. Si la trame de données n'est pas reçue correctement, il faudra attendre l'éventuel renvoi d'un signal S ou S' comprenant la trame de données.

Dans le mode DFP, un avantage est qu'un noeud dans un moment de réveil reçoit directement la trame de données ou une copie. Il n'a pas besoin de se réveiller ultérieurement pour la recevoir. De plus, la duplication de la trame de données accroît la fiabilité de la transmission. Cependant, le noeud ne peut pas éviter de recevoir des données non pertinentes, ce qui consomme de l'énergie inutilement.

Par ailleurs, chacun des modes de réception persistant/non persistant comporte des avantages respectifs. Par exemple, le mode de réception non persistant est avantageux, en terme de réduction de consommation d'énergie, dans les canaux à fort taux d'erreur et/ou dans lequel des erreurs ont lieu en rafale à des instants ponctuels (le noeud récepteur va alors éteindre sa radio pendant la rafale d'erreurs), tandis que le mode de réception persistant est avantageux dans les canaux à faible taux d'erreur.

Dans un mode de réalisation de l'invention, un noeud sélectionne un mode parmi les modes d'élaboration du signal MFP et DFP et/ou un mode parmi les modes de réception RP et RNP en fonction du taux d'erreur de transmission mesuré sur le canal 4 et en fonction d'au moins une des courbes représentées sur les figures 9 et 10.

Sur la figure 9 est représentée, en fonction de la probabilité d'erreur sur le canal radio relative aux micro-trames, une durée moyenne d'activité radio $T_x$, comprenant la durée d'activité radio en émission $T_{tx}$ et en réception $T_{rx}$, pour un noeud du réseau utilisant un mode d'élaboration DFP ou MFP, et utilisant un mode de réception RP ou RNP. Quatre courbes sont ainsi représentées, correspondant à quatre modes de fonctionnement : RP/DFP, RP/MFP, RNP/DFP, RNP/MFP. La durée moyenne d'activité radio est proportionnelle à l'énergie consommée par le noeud.

Sur la figure 10 est représentée, en fonction de la probabilité d'erreur sur le canal radio relative aux micro-trames, une fiabilité moyenne de transmission R, pour un noeud du réseau utilisant un mode d'élaboration DFP ou MFP, et utilisant un mode de réception RP ou RNP. Quatre courbes sont ainsi représentées : RP/DFP, RP/MFP, RNP/DFP, RNP/MFP.

En effet, dans un réseau tel que le réseau 1, un noeud envoie un signal d'acquittement une fois qu'il a reçu une trame de données qui lui était destinée. Ainsi si le noeud qui a transmis cette trame de données ne reçoit pas de signal d'acquittement, il réitère la transmission, appelée transmission simple, d'un signal S ou S' comprenant la trame de données jusqu'à ce qu'il reçoive un tel signal d'acquittement ou jusqu'à ce qu'il atteigne un nombre maximum $n_{max}$ déterminé de transmissions simples d'un signal S ou S' comprenant la trame de données. La fiabilité moyenne de transmission est la probabilité d'une transmission réussie de la trame de données prenant en compte cette possibilité de la re-transmettre $n_{max}$ fois en cas d'échec.

Les courbes représentées sur les figures 9 et 10 ont été tracées pour un canal de type BSC (Binary Symmetric Channel), dans lequel chaque bit a une probabilité d'erreur indépendante et constante. La valeur de $n_{max}$ a été prise égale à 3, m est égal à 10 (ie les trames $T_{Di}$ d'un préambule élaboré selon le mode DFP sont 10 fois plus larges que les micro-trames $T_{Mi}$ courbes d'un préambule élaboré selon le mode MFP) et k = 20.

La sélection d'un mode d'élaboration de signal et/ou d'un mode de réception du signal est réalisée, dans un mode de réalisation de l'invention, par un noeud de la façon suivante.

Soit TE le taux d'erreur mesuré par le noeud. En fonction de ce taux d'erreur TE, des courbes représentées en figure 9 et/ou en figure 10 et éventuellement de contraintes supplémentaires qui lui sont données, il détermine le mode de fonctionnement à sélectionner.

Par exemple, soit TE = 0.4, le taux d'erreur mesuré par le noeud sur le canal 4. Si la règle prise en compte par le noeud pour la sélection du mode de fonctionnement est une consommation d'énergie minimale, le noeud sélectionne alors le mode de fonctionnement RNP/MFP, qui est le mode de fonctionnement présentant une consommation d'énergie minimale pour une probabilité d'erreur prise égale à la valeur 0,4 du taux d'erreur TE mesuré.

En revanche, si la règle prise en compte par le noeud pour la sélection du mode de fonctionnement est une fiabilité maximum de la transmission, le noeud sélectionne alors le mode de fonctionnement RP/DFP, qui est le mode de fonctionnement présentant une fiabilité maximum de la transmission pour une probabilité d'erreur prise égale à la valeur 0,4 du taux d'erreur TE mesuré.

Dans un mode de fonctionnement, la règle prise en compte par le noeud est une consommation d'énergie minimale pour une valeur de fiabilité seuil garantie. Le mode de fonctionnement est alors choisi est fonction des courbes de la figure 9 et des courbes de la figure 10, pour une probabilité d'erreur p égale au taux d'erreur mesuré TE.

Dans le cas considéré, les courbes des figures 9 et 10 ont été dressées de la façon décrite ci-dessous.

Soit $p_f$ la probabilité d'un échec de transmission d'un signal S, S' dans la canal considéré. Alors, la fiabilité de transmission R est telle que R = 1 - $p_f^{n_{max}}$ .

Si T est la durée d'activité radio pour une transmission simple d'un signal S, S' comprenant un préambule et une trame de données (T = m*k+m), alors la durée totale d'activité radio pour la transmission de cette trame de données est $T_{tx}$, avec :

$$T_{tx} = \frac{1 - p_f^{n_{max}}}{1 - p_f^{n_{max}}} T ;$$

et la durée d'activité radio pour la réception est $T_{rx}$, avec :

$$T_{rx} = \frac{1 - p_f^{n_{max}}}{1 - p_f} [ p_f * F + (1 - p_f)*S] ;$$

avec S (respectivement F) une variable aléatoire qui exprime le temps que le noeud récepteur passe en activité radio pour la réception en cas de transmission simple réussie (respectivement non réussie).

Les valeurs de S, F et $p_f$ sont ensuite déterminées pour chacun des quatre modes de fonctionnement RP/DFP, RP/MFP, RNP/DFP, RNP/MFP.

Dans le cas RNP/DFP, $F = \frac{k-1}{k} * 2m + \frac{1}{k} * (U_m + m)$, où $U_m$ est une variable aléatoire uniforme dans [0,m[; $S = U_m + m$ et $p_f = 1 -(1-p)^m$.

Dans le cas RNP/MFP, F = p*2 + (1 - p)* (U_1 + 1 + m), où $U_1$ est une variable aléatoire uniforme dans [0,1 [ ; $S = U_1 + 1+ m$ et $P_f$ 1 -(1- $p$)$^{m+1}$.

Dans le cas RP/DFP, $p_f = \frac{q}{k} * \frac{1 - q^k}{1 - q}$, avec q = 1 -(1-$p$)$^m$; F = $U_m$ + m *(X/$_{failure}$) + m et S = $U_m$ + m * (X/$_{success}$) + m,

avec X = $p_f$*X/$_{failure}$ + (1 - $p_f$)*X/$_{success}$ où X est une variable discrète aléatoire exprimant le nombre de trames de données (du type $T_D$ et $T_{Di}$) corrompues reçues pendant la transmission de préambule, X $\in$ {0,...,k-1}, X/$_{failure}$ (respectivement X/$_{success}$) est une variable discrète aléatoire exprimant le nombre de trames corrompues reçues dans le préambule sachant que la transmission simple échoue (respectivement réussie). La variable X/$_{failure}$ vérifie P[X/$_{failure}$ = j] = 1/k.

Enfin, dans le cas RP/DFP, $p_f$ = q ; F = $U_1$ + $Y_1$ + m et S = $U_1$ + $Y_1$ + m, où $Y_1$ $\in$ {0, ..., mk-1} est une variable aléatoire exprimant le nombre de micro-trames reçues, corrompues ou non, et vérifie :

$$P[Y_1 = j] = \frac{1}{mk}\left[(mk - j)\,p^{\,j-1} - (mk - j - 1)\,p^{\,j}\right].$$

Dans le mode de réalisation de l'invention décrit ci-dessus, chaque noeud du réseau est récepteur et émetteur. Dans un mode de réalisation, un noeud peut être exclusivement émetteur ou exclusivement récepteur.

Tout ou partie des étapes mises en oeuvre par un noeud selon l'invention sont réalisées dans un mode de réalisation lors d'une exécution, par des moyens de traitement du noeud, d'instructions correspondantes d'un programme informatique.

La technique d'adaptation du noeud dans un mode de réalisation de l'invention permet ainsi de prolonger la vie des réseaux ad hoc, et plus généralement, elle permet de réduire la consommation d'énergie dans les réseaux de télécommunications, en permettant à un noeud d'adapter son mode d'élaboration d'un signal à émettre et/ou son mode de réception du signal en fonction d'au moins le taux d'erreur mesuré sur le canal radio, et le cas échéant en respectant des contraintes imposées sur la fiabilité de transmission.

**Revendications**

**1.** Procédé de communication, sur un canal radio, entre au moins deux noeuds (2) adaptés pour émettre sur ledit canal de façon alternée, **caractérisé en ce qu'**il comprend les étapes suivantes mises en oeuvre par l'un des deux noeuds, dit émetteur, en vue de transmettre une trame de données ($T_D$) :

- sélection d'un mode d'élaboration du signal entre au moins un premier (DFP) et un second (MFP) modes en fonction de contraintes prédéterminées;
- élaboration d'un signal (S) comprenant un préambule comportant une suite de trames ($T_{Di}$) suivi de la trame de données ($T_D$), ladite suite de trames comprenant au moins une première trame indiquant un nombre de trames du préambule séparant ladite première trame de la trame de données et le mode sélectionné, ladite au moins une première trame selon le premier mode comportant une copie de la trame de données et les trames de ladite suite de trames étant, selon le deuxième mode, de tailles réduites par rapport à la trame de données;
- émission, par ledit noeud émetteur, du signal ainsi élaboré sur le canal radio.

**2.** Procédé selon la revendication 1, **caractérisé en ce qu'**il comprend en outre l'étape suivante :

- détermination, par le noeud émetteur, d'un taux d'erreur de transmission (TE) sur le canal ; et **en ce que**

le mode d'élaboration du signal est sélectionné par ledit noeud en fonction d'au moins ledit taux d'erreur déterminé.

**3.** Procédé selon la revendication 2 **caractérisé en ce que** la sélection du mode d'élaboration du signal est réalisée en vue des échanges avec un noeud voisin, en fonction d'un taux d'erreur relatif au canal déterminé en fonction des échanges entre ledit noeud émetteur et ledit noeud voisin à l'exclusion des échanges avec les autres noeuds.

**4.** Procédé selon la revendication 2, **caractérisé en ce que** la sélection entre le premier (DFP) et le second (MFP) modes d'élaboration du signal est réalisée en fonction d'un ou plusieurs éléments parmi une valeur représentative d'une dépense énergétique déterminée en fonction d'une probabilité d'erreur sur le canal, une valeur de fiabilité de transmission globale sur le réseau déterminée en fonction de la probabilité d'erreur sur le canal, et une valeur seuil de fiabilité de transmission fixée.

**5.** Procédé de réception d'un signal émis par un noeud émetteur sur un canal radio selon le procédé de communication de la revendication 1, **caractérisé en ce qu'**il comprend les étapes suivantes, mises en oeuvre par le noeud (2), dit récepteur :

- réception d'une première trame ($T_{D2}$) de la suite de trames,
- lecture du mode (MFP, DFP) et du nombre de trames indiqués par la trame reçue;
- détermination en fonction du mode et du nombre indiqués par ladite trame reçue, d'un délai ($T_{DFP}$, $T_{MFP}$) de retour à mode d'écoute radio active;
- passage dans un mode d'écoute radio inactive du noeud récepteur pendant le délai déterminé.

**6.** Procédé de réception selon la revendication 1, **caractérisé en ce que**, si le mode indiqué par ladite trame reçue est le premier mode (DFP), le délai ($T_{DFP}$) déterminé court jusqu'à l'issue de la transmission de la trame de données et **en ce qu'**il comprend en outre une étape d'émission d'un accusé de réception relatif à la réception de ladite première trame, à l'issue du délai déterminé.

**7.** Procédé de réception selon la revendication 6, **caractérisé en ce qu'**il comprend les étapes suivantes :

- détermination, par le noeud (2), dit récepteur, d'un taux d'erreur de transmission (TE) sur le canal (4) ;
- sélection, en fonction d'au moins ledit taux d'erreur déterminé, par le noeud récepteur, d'un mode entre au moins un premier (RP) et un second (RNP) modes de réception du signal comprenant un préambule comprenant une suite de trames ($T_{Di}$, $T_{Mj}$), suivi de la trame de données ($T_D$);

selon lequel dans le premier mode de réception (RP), si le noeud récepteur détecte une transmission d'une trame de préambule sur le canal, ledit noeud reste en mode d'écoute radio active jusqu'à ce qu'il reçoive une trame correcte du préambule ou jusqu'à ce que le noeud récepteur détermine que le canal est libéré ; et
selon lequel dans le second mode de réception (RNP), si le noeud récepteur détecte une transmission d'une trame d'un préambule sur le canal, ledit noeud passe en mode d'écoute radio inactive après la réception d'une trame incorrecte du préambule alors qu'au moins une trame dudit préambule est émise sur le canal après ladite trame incorrecte.

**8.** Procédé de réception selon la revendication 7, dans lequel la sélection par le noeud récepteur entre le premier (RP) et le second (RNP) modes de réception du signal est réalisée en vue des échanges avec un noeud voisin en fonction d'un taux d'erreur relatif au canal déterminé en fonction des échanges entre ledit noeud récepteur et ledit noeud voisin à l'exclusion des échanges avec les autres noeuds.

**9.** Procédé de réception selon la revendication 7, selon lequel la sélection entre le premier (RP) et le second (RNP) modes de réception du signal est réalisée en fonction de un ou plusieurs éléments parmi une valeur représentative d'une dépense énergétique déterminée en fonction d'une probabilité d'erreur sur le canal, une valeur de fiabilité de transmission globale sur le réseau déterminée en fonction de la probabilité d'erreur sur le canal, et une valeur seuil de fiabilité de transmission fixée.

**10.** Station émettrice pour former un noeud (2) apte à émettre sur un canal radio de communication en semi-duplex, **caractérisée en ce qu'**elle comprend :

- des moyens de sélection d'un mode d'élaboration du signal entre au moins un premier (DFP) et un second (MFP) modes en fonction de contraintes prédéterminées;
- des moyens d'élaboration (5), adaptés pour élaborer, en vue de transmettre une trame de données ($T_D$), un signal comprenant un préambule comportant une suite (8) de trames ($T_{Di}$), suivi de la trame de données, ladite suite de trames comprenant au moins une première trame de la suite de trames indiquant un nombre de trames du préambule séparant ladite première trame de la trame de données et le mode sélectionné, ladite au moins une première trame selon le premier mode comportant une copie de la trame de données et les trames de ladite suite de trames étant, selon le deuxième mode, de tailles réduites par rapport à la trame de données;
- des moyens d'émission radio (6,6') adaptés pour émettre le signal ainsi élaboré sur le canal radio;

**11.** Station réceptrice pour former un noeud (2) apte à écouter par intermittence un canal radio, **caractérisée en ce qu'**elle comprend :

- des moyens de réception radio (6,6') aptes à recevoir un signal comprenant un préambule comportant une suite (8) de trames ($T_{Di}$), suivi de la trame de données, ladite suite de trames comprenant au moins une première trame de la suite de trames indiquant un nombre de trames du préambule séparant ladite première trame de la trame de données et le mode sélectionné, ladite au moins une première trame selon le premier mode comportant une copie de la trame de données et les trames de ladite suite de trames étant, selon le deuxième mode, de tailles réduites par rapport à la trame de données;
- des moyens de lecture du mode (MFP, DFP) et du nombre de trames indiqués dans ladite première trame reçue;
- des moyens de détermination en fonction du mode et du nombre indiqués par ladite trame reçue, d'un délai ($T_{DFP}$, $T_{MFP}$) de retour à mode d'écoute radio active;
- des moyens de contrôle (7), adaptés pour provoquer le passage dans un mode d'écoute radio inactive des moyens de réception radio du noeud pendant le délai déterminé.

**12.** Réseau comportant au moins un noeud comprenant une station émettrice selon la revendication 10 et au moins un noeud comprenant une station réceptrice selon la revendication 11.

**13.** Programme d'ordinateur à installer dans une station émettrice pour former un noeud (2) apte à émettre sur un canal radio, ledit programme comprenant des instructions pour mettre en oeuvre les étapes suivantes lors d'une exécution du programme par des moyens de traitement de ladite station émettrice, en vue de transmettre une trame de données :

- sélection d'un mode d'élaboration du signal entre au moins un premier (DFP) et un second (MFP) modes en fonction de contraintes prédéterminées;
- élaboration, en vue de transmettre une trame de données ($T_D$), d'un signal comprenant un préambule comportant une suite (8) de trames ($T_{Di}$), suivi de la trame de données, ladite suite de trames comprenant au moins une première trame de la suite de trames indiquant un nombre de trames du préambule séparant ladite première trame de la trame de données et le mode sélectionné, ladite au moins une première trame selon le premier mode comportant une copie de la trame de données et les trames de ladite suite de trames étant, selon le deuxième mode, de tailles réduites par rapport à la trame de données;
- émission radio du signal ainsi élaboré sur le canal radio;

**14.** Programme d'ordinateur à installer dans une station réceptrice comprenant des moyens de réception radio (6,6') pour former un noeud (2), apte à écouter le canal radio par intermittence, ledit programme comprenant des instructions pour mettre en oeuvre les étapes suivantes lors d'une exécution du programme par des moyens de traitement de ladite station réceptrice :

- réception radio d'un signal comprenant un préambule comportant une suite (8) de trames ($T_{Di}$), suivi de la trame de données, ladite suite de trames comprenant au moins une première trame de la suite de trames indiquant un nombre de trames du préambule séparant ladite première trame de la trame de données et le mode sélectionné, ladite au moins une première trame selon le premier mode comportant une copie de la trame de données et les trames de ladite suite de trames étant, selon le deuxième mode, de tailles réduites par rapport à la trame de données;
- lecture du mode (MFP, DFP) et du nombre de trames indiqués dans ladite première trame reçue;
- détermination en fonction du mode et du nombre indiqués par ladite trame reçue, d'un délai ($T_{DFP}$, $T_{MFP}$) de retour à mode d'écoute radio active;
- passage dans un mode d'écoute radio inactive des moyens de réception radio du noeud pendant le délai déterminé.

**Patentansprüche**

**1.** Kommunikationsverfahren, auf einem Funkkanal, zwischen mindestens zwei Knoten (2), die geeignet sind, um abwechselnd auf dem Kanal zu senden, **dadurch gekennzeichnet, dass** es die folgenden Schritte enthält, die von einem der zwei Knoten, Sender genannt, zur Übertragung eines Datenrahmens ($T_D$) durchgeführt werden:

- Auswahl eines Erzeugungsmodus des Signals zwischen mindestens einem ersten (DFP) und einem zweiten (MFP) Modus abhängig von vorherbestimmten Einschränkungen;
- Erzeugung eines Signals (S), das eine eine Rahmenfolge ($T_{Di}$) aufweisende Präambel gefolgt vom Datenrahmen ($T_D$) enthält, wobei die Rahmenfolge mindestens einen ersten Rahmen enthält, der eine Anzahl von Rahmen der Präambel, die den ersten Rahmen vom Datenrahmen trennt, und den ausgewählten Modus anzeigt, wobei der mindestens eine erste Rahmen gemäß dem ersten Modus eine Kopie des Datenrahmens aufweist, und die Rahmen der Rahmenfolge gemäß dem zweiten Modus von verringerter Größe bezüglich des Datenrahmens sind;
- Senden, durch den Sendeknoten, des so erzeugten Signals auf dem Funkkanal.

**2.** Verfahren nach Anspruch 1, **dadurch gekennzeichnet, dass** es außerdem den folgenden Schritt enthält:

- Ermittlung, durch den Sendeknoten, einer Übertragungsfehlerrate (TE) auf dem Kanal;

und dass der Erzeugungsmodus des Signals von dem Knoten abhängig von mindestens der ermittelten Fehlerrate ausgewählt wird.

3. Verfahren nach Anspruch 2, **dadurch gekennzeichnet, dass** die Auswahl des Erzeugungsmodus des Signals im Hinblick auf die Austauschvorgänge mit einem benachbarten Knoten durchgeführt wird, abhängig von einer auf den Kanal bezogenen ermittelten Fehlerrate abhängig von den Austauschvorgängen zwischen dem Sendeknoten und dem benachbarten Knoten ausschließlich der Austauschvorgänge mit den anderen Knoten.

4. Verfahren nach Anspruch 2, **dadurch gekennzeichnet, dass** die Auswahl zwischen dem ersten (DFP) und dem zweiten (MFP) Erzeugungsmodus des Signals abhängig von einem oder mehreren Elementen von einem für einen abhängig von einer Fehlerwahrscheinlichkeit auf dem Kanal ermittelten Energieverbrauch repräsentativen Wert, einem abhängig von der Fehlerwahrscheinlichkeit auf dem Kanal ermittelten globalen Übertragungszuverlässigkeitswert im Netz und einem festgelegten Schwellwert der Übertragungszuverlässigkeit durchgeführt wird.

5. Verfahren zum Empfang eines Signals, das von einem Sendeknoten auf einem Funkkanal gemäß dem Kommunikationsverfahren nach Anspruch 1 gesendet wird, **dadurch gekennzeichnet, dass** es die folgenden Schritte enthält, die vom so genannten Empfangsknoten (2) durchgeführt werden:

   - Empfang eines ersten Rahmens ($T_{D2}$) der Rahmenfolge,
   - Ablesen des Modus (MFP, DFP) und der Anzahl von Rahmen, die vom empfangenen Rahmen angezeigt werden;
   - Ermitteln, abhängig vom den vom empfangenen Rahmen angezeigten Modus und Anzahl, einer Verzögerung ($T_{DFP}$, $T_{MFP}$) der Rückkehr zum aktiven Funkabhörmodus;
   - Übergang des Empfängerknotens in einen inaktiven Funkabhörmodus während der ermittelten Verzögerung.

6. Empfangsverfahren nach Anspruch 1, **dadurch gekennzeichnet, dass**, wenn der vom empfangenen Rahmen angezeigte Modus der erste Modus (DFP) ist, die ermittelte Verzögerung ($T_{DFP}$) bis zum Ende der Übertragung des Datenrahmens läuft, und dass es außerdem einen Schritt des Sendens einer Empfangsbestätigung bezüglich des Empfangs des ersten Rahmens am Ende der ermittelten Verzögerung enthält.

7. Empfangsverfahren nach Anspruch 6, **dadurch gekennzeichnet, dass** es die folgenden Schritte enthält:

   - Ermittlung, durch den so genannten Empfangsknoten (2), einer Übertragungsfehlerrate (TE) auf dem Kanal (4);
   - Auswahl, abhängig von mindestens der ermittelten Fehlerrate, durch den Empfangsknoten, eines Modus zwischen mindestens einem ersten (RP) und einem zweiten (RNP) Empfangsmodus des Signals, das eine eine Rahmenfolge ($T_{Di}$; $T_{Mj}$) enthaltende Präambel gefolgt vom Datenrahmen ($T_D$) enthält;

   gemäß dem im ersten Empfangsmodus (RP), wenn der Empfangsknoten eine Übertragung eines Präambelrahmens auf dem Kanal erfasst, der Knoten im aktiven Funkabhörmodus bleibt, bis er einen korrekten Rahmen der Präambel empfängt, oder bis der Empfangsknoten feststellt, dass der Kanal freigegeben ist; und
   gemäß dem im zweiten Empfangsmodus (RNP), wenn der Empfangsknoten eine Übertragung eines Rahmens einer Präambel auf dem Kanal erfasst, der Knoten nach Empfang eines nicht korrekten Rahmens der Präambel in den aktiven Funkabhörmodus übergeht, während mindestens ein Rahmen der Präambel nach dem nicht korrekten Rahmen in dem Kanal gesendet wird.

8. Empfangsverfahren nach Anspruch 7, bei dem die Auswahl durch den Empfangsknoten zwischen dem ersten (RP) und dem zweiten (RNP) Empfangsmodus des Signals im Hinblick auf die Austauschvorgänge mit einem benachbarten Knoten durchgeführt wird, abhängig von einer auf den Kanal bezogenen ermittelten Fehlerrate abhängig von den Austauschvorgängen zwischen dem Empfangsknoten und dem benachbarten Knoten ausschließlich der Austauschvorgänge mit den anderen Knoten.

9. Empfangsverfahren nach Anspruch 7, bei dem die Auswahl zwischen dem ersten (RP) und dem zweiten (RNP) Empfangsmodus des Signals abhängig von einem oder mehreren Elementen von einem für einen abhängig von einer Fehlerwahrscheinlichkeit auf dem Kanal ermittelten Energieverbrauch repräsentativen Wert, einem abhängig von der Fehlerwahrscheinlichkeit auf dem Kanal ermittelten globalen Übertragungszuverlässigkeitswert im Netz und einem festgelegten Schwellwert der Übertragungszuverlässigkeit durchgeführt wird.

10. Sendestation, um einen Knoten (2) zu formen, der auf einem Kommunikationsfunkkanal im Halbduplexbetrieb senden kann, **dadurch gekennzeichnet, dass** sie enthält:

   - Auswahleinrichtungen eines Erzeugungsmodus des Signals zwischen mindestens einem ersten (DFP) und einem zweiten (MFP) Modus abhängig von vorherbestimmten Einschränkungen;

- Erzeugungseinrichtungen (5), die geeignet sind, um zur Übertragung eines Datenrahmens ($T_D$) ein Signal zu erzeugen, das eine eine Folge (8) von Rahmen ($T_{Di}$) aufweisende Präambel gefolgt vom Datenrahmen enthält, wobei die Rahmenfolge mindestens einen ersten Rahmen der Rahmenfolge enthält, der eine Anzahl von Rahmen der Präambel, die den ersten Rahmen vom Datenrahmen trennt, und den ausgewählten Modus anzeigt, wobei der mindestens eine erste Rahmen gemäß dem ersten Modus eine Kopie des Datenrahmens aufweist, und die Rahmen der Rahmenfolge gemäß dem zweiten Modus von verringerter Größe bezüglich des Datenrahmens sind;

- Funksendeeinrichtungen (6, 6'), die geeignet sind, um das so erzeugte Signal auf dem Funkkanal zu senden.

11. Empfangsstation, um einen Knoten (2) zu formen, der zeitweise einen Funkkanal abhören kann, **dadurch gekennzeichnet, dass** sie enthält:

- Funkempfangseinrichtungen (6, 6'), die ein Signal empfangen können, das eine eine Folge (8) von Rahmen ($T_{Di}$) aufweisende Präambel gefolgt vom Datenrahmen enthält, wobei die Rahmenfolge mindestens einen ersten Rahmen der Rahmenfolge enthält, der eine Anzahl von Rahmen der Präambel, die den ersten Rahmen vom Datenrahmen trennt, und den ausgewählten Modus anzeigt, wobei der mindestens eine erste Rahmen gemäß dem ersten Modus eine Kopie des Datenrahmens aufweist, und die Rahmen der Rahmenfolge gemäß dem zweiten Modus von verringerter Größe bezüglich des Datenrahmens sind;

- Ableseeinrichtungen des Modus (MFP, DFP) und der Anzahl von Rahmen, die im empfangenen ersten Rahmen angezeigt sind;

- Ermittlungseinrichtungen, abhängig vom Modus und von der Anzahl, die durch den empfangenen Rahmen angezeigt werden, einer Verzögerung ($T_{DFP}$, $T_{MFP}$) der Rückkehr zum aktiven Funkabhörmodus;

- Steuereinrichtungen (7), die geeignet sind, um den Übergang der Funkempfangseinrichtungen des Knotens in einen inaktiven Funkabhörmodus während der ermittelten Verzögerung zu bewirkten.

12. Netz, das mindestens einen Knoten, der eine Sendestation nach Anspruch 10 enthält, und mindestens einen Knoten aufweist, der eine Empfangsstation nach Anspruch 11 enthält.

13. Computerprogramm, das in einer Sendestation installiert werden soll, um einen Knoten (2) zu formen, der auf einem Funkkanal senden kann, wobei das Programm Anweisungen enthält, um die folgenden Schritte bei einer Ausführung des Programms durch Verarbeitungseinrichtungen der Sendestation zur Übertragung eines Datenrahmens anzuwenden:

- Auswahl eines Erzeugungsmodus des Signals zwischen mindestens einem ersten (DFP) und einem zweiten (MFP) Modus abhängig von vorherbestimmten Einschränkungen;

- Erzeugung, zur Übertragung eines Datenrahmens ($T_D$), eines Signals, das eine eine Folge (8) von Rahmen ($T_{Di}$) aufweisende Präambel gefolgt vom Datenrahmen enthält, wobei die Rahmenfolge mindestens einen ersten Rahmen der Rahmenfolge enthält, der eine Anzahl von Rahmen der Präambel, die den ersten Rahmen vom Datenrahmen trennt, und den ausgewählten Modus anzeigt, wobei der mindestens eine erste Rahmen gemäß dem ersten Modus eine Kopie des Datenrahmens aufweist, und die Rahmen der Rahmenfolge gemäß dem zweiten Modus von verringerter Größe bezüglich des Datenrahmens sind;

- Funksendung des so erzeugten Signals im Funkkanal.

14. Computerprogramm, das in einer Empfangsstation installiert werden soll, die Funkempfangseinrichtungen (6, 6') enthält, um einen Knoten (2) zu formen, der den Funkkanal zeitweise abhören kann, wobei das Programm Anweisungen enthält, um die folgenden Schritte bei einer Ausführung des Programms durch Verarbeitungseinrichtungen der Empfangsstation anzuwenden:

- Funkempfang eines Signals, das eine eine Folge (8) von Rahmen ($T_{Di}$) aufweisende Präambel gefolgt vom Datenrahmen enthält, wobei die Rahmenfolge mindestens einen ersten Rahmen der Rahmenfolge enthält, der eine Anzahl von Rahmen der Präambel, die den ersten Rahmen vom Datenrahmen trennt, und den ausgewählten Modus anzeigt, wobei der mindestens eine erste Rahmen gemäß dem ersten Modus eine Kopie des Datenrahmens aufweist, und die Rahmen der Rahmenfolge gemäß dem zweiten Modus von verringerter Größe bezüglich des Datenrahmens sind;

- Ablesen des Modus (MFP, DFP) und der Anzahl von Rahmen, die in dem ersten empfangenen Rahmen angezeigt sind;

- Ermitteln, abhängig vom Modus und von der Anzahl, die vom empfangenen Rahmen angezeigt werden, einer Verzögerung ($T_{DFP}$, $T_{MFP}$) der Rückkehr zum aktiven Funkabhörmodus;
- Übergang der Funkempfangseinrichtungen des Knotens in einen inaktiven Funkabhörmodus während der ermittelten Verzögerung.

**Claims**

1. Method of communication, on a radio channel, between at least two nodes (2) adapted for emitting on the said channel in an alternating manner, **characterized in that** it comprises the following steps implemented by one of the two nodes, termed the emitter, with a view to transmitting a data frame ($T_D$):

   - selection of a mode of formulation of the signal between at least one first (DFP) and one second (MFP) modes as a function of predetermined constraints;
   - formulation of a signal (S) comprising a preamble comprising a series of frames (TDi), followed by the data frame ($T_D$), the said series of frames comprising at least one first frame indicating a number of frames of the preamble separating the said first frame from the data frame and the selected mode, the said at least one first frame according to the first mode comprising a copy of the data frame and the frames of the said series of frames being, according to the second mode, of reduced size with respect to the data frame;
   - emission, by the said emitter node, of the signal thus formulated on the radio channel.

2. Method according to Claim 1, **characterized in that** it furthermore comprises the following step:

   - determination, by the emitter node, of a transmission error rate (TE) on the channel; and **in that**

   the mode of formulating the signal is selected by the said node as a function of at least the said determined error rate.

3. Method according to Claim 2, **characterized in that** the selection of the mode of formulating the signal is carried out with a view to the exchanges with a neighbouring node, as a function of an error rate relating to the channel determined as a function of the exchanges between the said emitter node and the said neighbouring node with the exclusion of the exchanges with the other nodes.

4. Method according to Claim 2, **characterized in that** the selection between the first (DFP) and the second (MFP) modes of formulating the signal is made as a function of one or more elements from among a value representative of an energy expenditure determined as a function of a probability of error on the channel, a value of overall transmission reliability on the network determined as a function of the probability of error on the channel, and a fixed transmission reliability threshold value.

5. Method of receiving a signal emitted by an emitter node on a radio channel according to the method of communication of Claim 1, **characterized in that** it comprises the following steps, implemented by the node (2), termed the receiver:

   - reception of a first frame ($T_{D2}$) of the series of frames,
   - reading of the mode (MFP, DFP) and the number of frames indicated by the frame received;
   - determination, as a function of the mode and the number indicated by the said frame received, of a time span ($T_{DFP}$, $T_{MFP}$) for the return to an active radio listening mode;
   - switchover to an inactive radio listening mode of the receiver node during the determined time span.

6. Method of reception according to Claim 1, **characterized in that** if the mode indicated by the said frame received is the first mode (DFP), the determined time span ($T_{DFP}$) runs until the completion of the transmission of the data frame and **in that** it furthermore comprises a step of emitting an acknowledgement of receipt relating to the reception of the said first frame, on completion of the determined time span.

7. Method of reception according to Claim 6, **characterized in that** it comprises the following steps:

   - determination, by the node (2), termed the receiver, of a transmission error rate (TE) on the channel (4);
   - selection, as a function of at least the said determined error rate, by the receiver node, of a mode between at least one first (PR) and one second (NPR) mode of receiving the signal comprising a preamble comprising a series of frames ($T_{Di}$, $T_{Mj}$), followed by the data frame ($T_D$);

according to which in the first mode of reception (PR), if the receiver node detects a transmission of a preamble frame on the channel, the said node remains in active radio listening mode until it receives a correct frame of the preamble or until the receiver node determines that the channel is freed; and

according to which in the second mode of reception (NPR), if the receiver node detects a transmission of a frame of a preamble on the channel, the said node switches to inactive radio listening mode after receipt of an incorrect frame of the preamble while at least one frame of the said preamble is emitted on the channel after the said incorrect frame.

8. Method according to Claim 7, in which the selection by the receiver node between the first (PR) and the second (NPR) modes of receiving the signal is carried out with a view to the exchanges with a neighbouring node as a function of an error rate relating to the channel determined as a function of the exchanges between the said receiver node and the said neighbouring node with the exclusion of the exchanges with the other nodes.

9. Method according to Claim 7, according to which the selection between the first (PR) and the second (NPR) modes of receiving the signal is made as a function of one or more elements from among a value representative of an energy expenditure determined as a function of a probability of error on the channel, a value of overall transmission reliability on the network determined as a function of the probability of error on the channel, and a fixed transmission reliability threshold value.

10. Emitter station for forming a node (2) able to emit on a radio communication channel in half-duplex, **characterized in that** it comprises:

   - means of selecting a mode of formulation of the signal between at least one first (DFP) and one second (MFP) mode as a function of predetermined constraints;
   - formulation means (5), adapted for formulating, with a view to transmitting a data frame ($T_D$), a signal comprising a preamble comprising a series (8) of frames ($T_{Di}$), followed by the data frame, the said series of frames comprising at least one first frame of the series of frames indicating a number of frames of the preamble separating the said first frame from the data frame and the selected mode, the said at least one first frame according to the first mode comprising a copy of the data frame and the frames of the said series of frames being, according to the second mode, of reduced size with respect to the data frame;
   - radio emission means (6,6') adapted for emitting the signal thus formulated on the radio channel.

11. Receiver station for forming a node (2) able to listen intermittently to a radio channel, **characterized in that** it comprises:

   - radio reception means (6,6'), able to receive a signal comprising a preamble comprising a series (8) of frames ($T_{DI}$), followed by the data frame, the said series of frames comprising at least one first frame of the series of frames indicating a number of frames of the preamble separating the said first frame from the data frame and the selected mode, the said at least one first frame according to the first mode comprising a copy of the data frame and the frames of the said series of frames being, according to the second mode, of reduced size with respect to the data frame;
   - means of reading the mode (MFP, DFP) and the number of frames indicated in the said first frame received;
   - means for determining, as a function of the mode and the number indicated by the said frame received, a time span ($T_{DFP}$, $T_{MFP}$) for the return to an active radio listening mode;
   - control means (7), adapted for causing the switchover to an inactive radio listening mode of the radio reception means of the node during the determined time span.

12. Network comprising at least one node comprising an emitter station according to Claim 10 and at least one node comprising a receiver station according to Claim 11.

13. Computer program to be installed in an emitter station for forming a node (2) able to emit on a radio channel, the said program comprising instructions for implementing the following steps during an execution of the program by processing means of the said emitter station, with a view to transmitting a data frame:

   - selection of a mode of formulation of the signal between at least one first (DFP) and one second (MFP) mode as a function of predetermined constraints;
   - formulation, with a view to transmitting a data frame ($T_D$), of a signal comprising a preamble comprising a series (8) of frames ($T_{Di}$), followed by the data frame, the said series of frames comprising at least one first frame of a series of frames indicating a number of frames from the preamble separating the said first frame from the data frame and the selected mode, the said at least one first frame according to the first mode comprising a copy of the data frame and the frames of the said series of frames being, according to the second mode, of reduced size with respect to the data frame;
- radio emission of the signal thus formulated on the radio channel.

14. Computer program to be installed in a receiver station comprising radio reception means (6,6') for forming a node (2), able to listen to the radio channel intermittently, the said program comprising instructions for implementing the following steps during an execution of the program by processing means of the said receiver station:

- radio reception of a signal comprising a preamble comprising a series (8) of frames ($T_{DI}$), followed by the data frame, the said series of frames comprising at least one first frame of the series of frames indicating a number of frames of the preamble separating the said first frame from the data frame and the selected mode, the said at least one first frame according to the first mode comprising a copy of the data frame and the frames of the said series of frames being, according to the second mode, of reduced size with respect to the data frame;
- reading of the mode (MFP, DFP) and of the number of frames indicated in the said first frame received;
- determination, as a function of the mode and the number indicated by the said frame received, of a time span ($T_{DFP}$, $T_{MFP}$) for the return to an active radio listening mode;
- switchover to an inactive radio listening mode of the radio reception means of the node during the determined time span.

# FIG.1.
## ART ANTÉRIEUR

# FIG.2.
## ART ANTÉRIEUR

# FIG.3.

FIG.4a.

$T_{D1}$ $T_{D2}$ $T_{Dk}$

DFP

FIG.4b.

$T_{D2}$ ACK

$T_{DFP}$

25

FIG.5a.

$T_{M1}$ $T_{M2}$ $T_{Mi}$ $T_{Mmxk}$

MFP

FIG.5b.

$T_{Mi}$ $T_{MFP}$ $T_D$ ACK

25 25

FIG.8.

25 25

26

| TYPE | DEST. | N° | CONT. |
|------|-------|-----|-------|
| 20 | 21 | 22 | 23 |

FIG.6.

FIG.7.

FIG.9.

FIG.10.

EP 2 039 106 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **CHIPCON AS.** *CC1100/CC2500 Wake on Radio Application Note (Rev 1.0,* Juillet 2005

- **SHI et al.** Wake-Up-Frame Scheme for Ultra Low Power Wireless Transceivers. IEEE Communications Society Globecom, 2004